(19) Europäisches Patentamt / European Patent Office / Office européen des brevets

(11) **EP 3 380 656 B1**

(12) **EUROPEAN PATENT SPECIFICATION**

(45) Date of publication and mention
of the grant of the patent:
**07.04.2021 Bulletin 2021/14**

(51) Int Cl.:
***D01F 1/10*** *(2006.01)*          ***D01F 8/06*** *(2006.01)*
***C08L 23/08*** *(2006.01)*          ***C08L 23/10*** *(2006.01)*

(21) Application number: **16816490.3**

(22) Date of filing: **23.11.2016**

(86) International application number:
**PCT/US2016/063497**

(87) International publication number:
**WO 2017/091669 (01.06.2017 Gazette 2017/22)**

(54) **BICOMPONENT FILAMENTS**

BIKOMPONENTENFASERN

FILAMENTS BICOMPOSANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2015 US 201562259806 P**

(43) Date of publication of application:
**03.10.2018 Bulletin 2018/40**

(73) Proprietor: **Dow Global Technologies LLC
Midland, MI 48674 (US)**

(72) Inventor: **STOILJKOVIC, Aleksandar
8810 Horgen (CH)**

(74) Representative: **Boult Wade Tennant LLP
Salisbury Square House
8 Salisbury Square
London EC4Y 8AP (GB)**

(56) References cited:
**EP-A2- 1 944 395      WO-A1-2015/123829
US-A- 5 266 392**

**Description**

TECHNICAL FIELD

This disclosure relates to bicomponent filaments, and in particular, to bicomponent filaments for use in nonwoven fabrics.

BACKGROUND

Nonwoven fabrics (NW) are cloth-like materials that are manufactured from filaments which are brought together via different bonding techniques. Nonwoven fabrics may be used in disposable absorbent articles, such as, diapers, wipes, feminine hygiene, and adult incontinence products.

Nonwoven fabrics may comprise polypropylene (PP) because of its excellent processing characteristics in spunmelt processes as well as its contribution to the mechanical performance of the product. One of the major drawbacks of nonwoven products that contain polypropylene is the lack of softness. The softness can be addressed by the introduction of polyethylene (PE) into the nonwoven fabric. While the polyethylene can provide softness and drapability, and the polypropylene can contribute to overall mechanical performance, a decrease in nonwoven abrasion resistance can occur, especially, as the fabric age.

EP1944395 describes a fiber modifier for improving thermo-bonding affinity of a composite fiber to a natural fiber includes a blend of maleic anhydride and a copolymer component selected from a copolymer of ethylene and acrylic acid, a copolymer of ethylene and methacrylic acid, and combinations thereof. A core and sheath composite fiber including a sheath component made from a fiber composition that contains the above fiber modifier is also described.

WO2015123829 describes a multilayer film comprising a first layer and a second layer; and a tie layer; where the tie layer comprises a crystalline block composite and where the tie layer is disposed between the first layer and the second layer; the first layer being disposed on a first surface of the tie layer; the second layer being disposed on a second surface of the tie layer; where the second surface is opposedly disposed to the first surface; where the crystalline block composite comprises a crystalline ethylene based polymer, a crystalline alpha-olefin based polymer and a block copolymer comprising a crystalline ethylene block and a crystalline alpha- olefin block.

US5266392 describes compatibilized blends of polypropylene, linear low density polyethylene and a low molecular weight plastomer are disclosed.

It is therefore desirable to manufacture nonwoven fabrics from polymeric blends of polyethylene and polypropylene having improved abrasion resistance.

SUMMARY

Disclosed herein are bicomponent filaments. The bicomponent filaments comprise a first region comprising an ethylene-based polymer; a second region comprising a propylene-based polymer; and a compatibilizer comprising a crystalline block composite having (1) a crystalline ethylene-based polymer (2) a crystalline alpha-olefin-based polymer, and (3) a block copolymer having a crystalline ethylene block and a crystalline alpha-olefin block, wherein the crystalline ethylene block is essentially the same composition as the crystalline ethylene-based polymer and the crystalline alpha-olefin block is essentially the same composition as the crystalline alpha-olefin-based polymer; wherein the compatibilizer is present in at least one of the first region or the second region.

Also disclosed herein are methods of manufacturing bicomponent filaments. The methods comprise blending a composition comprising an ethylene-based polymer, a propylene-based polymer, and a compatibilizer, wherein the compatibilizer comprises a crystalline block composite having (1) a crystalline ethylene-based polymer (2) a crystalline alpha-olefin based polymer, and (3) a block copolymer having a crystalline ethylene block and a crystalline alpha-olefin block, wherein the crystalline ethylene block is essentially the same composition as the crystalline ethylene-based polymer and the crystalline alpha-olefin block is essentially the same composition as the crystalline alpha-olefin based polymer; and extruding the composition to form a bicomponent filament; wherein the bicomponent filament comprises a first region comprising the ethylene-based polymer, a second region comprising the propylene-based polymer, and the compatibilizer is present in at least one of the first region or the second region.

Further disclosed herein are nonwoven fabrics. The nonwoven fabrics are formed from a bicomponent filament comprising a first region comprising an ethylene-based polymer; a second region comprising a propylene-based polymer; and a compatibilizer comprising a crystalline block composite having (1) a crystalline ethylene-based polymer (2) a crystalline alpha-olefin-based polymer, and (3) a block copolymer having a crystalline ethylene block and a crystalline alpha-olefin block, wherein the crystalline ethylene block is essentially the same composition as the crystalline ethylene-based polymer and the crystalline alpha-olefin block is essentially the same composition as the crystalline alpha-olefin-based polymer; wherein the compatibilizer is present in at least one of the first region or the second region.

Further disclosed herein are methods of manufacturing nonwoven fabrics. The methods comprise providing two or more bicomponent filaments, each bicomponent filament comprising a first region comprising an ethylene-based polymer; a second region comprising a propylene-based polymer; and a compatibilizer comprising a crystalline block composite having (1) a crystalline ethylene-based polymer (2) a crystalline alpha-olefin-based polymer, and (3) a block copolymer having a crystalline ethylene block and a crystalline alpha-olefin block, wherein the crystalline ethylene block is essentially the same composition as the crystalline ethylene-based polymer and the crystalline alpha-olefin block is essentially the same composition as the crystalline alpha-olefin-based polymer; wherein the compatibilizer is present in at least one of the first region or the second region; and bonding the two or more bicomponent filaments to each other to form a nonwoven fabric.

Additional features and advantages of the embodiments will be set forth in the detailed description which follows, and in part will be readily apparent to those skilled in the art from that description or recognized by practicing the embodiments described herein, including the detailed description which follows, the claims. It is to be understood that both the foregoing and the following description describe various embodiments and are intended to provide an overview or framework for understanding the nature and character of the claimed subject matter, and serve to explain the principles and operations of the claimed subject matter.

DETAILED DESCRIPTION

Reference will now be made in detail to embodiments of bicomponent filaments, methods of manufacturing bicomponent filaments, which may be used to produce nonwoven fabrics for use in hygiene absorbent articles, such as, diapers, wipes, feminine hygiene, and adult incontinence products. It is noted, however, that this is merely an illustrative implementation of the embodiments disclosed herein. The embodiments are applicable to other technologies that are susceptible to similar problems as those discussed above. For example, nonwoven fabrics comprising the bicomponent filaments described herein may be used to produce face masks, surgical gowns, isolation gowns, surgical drapes and covers, surgical caps, tissues, bandages, and wound dressings are clearly within the purview of the present embodiments. The terms "fibers" and "filaments" are used interchangeably herein.

Bicomponent Filaments

In embodiments herein, the bicomponent filaments comprise a first region comprising an ethylene-based polymer, a second region comprising a propylene-based polymer, and a compatibilizer in at least one of the first region or the second region.

First Region

The first region comprises an ethylene-based polymer. In some embodiments herein, the first region of the bicomponent filament may comprise from greater than 50 to 99, for example from 55 to 99, from 75 to 99, from 80 to 99, from 85 to 99, from 50 to 95, from 75 to 95, from 50 to 90, from 75 to 90, percent by weight, of an ethylene-based polymer, based on the total amount of polymers present in the first region.

The ethylene-based polymer comprises (a) less than or equal to 100 percent, for example, at least 70 percent, or at least 80 percent, or at least 90 percent, or at least 92 percent, or at least 95 percent, by weight of the units derived from ethylene; and (b) less than 30 percent, for example, less than 25 percent, or less than 20 percent, or less than 10 percent, or less than 8 percent, or less than 5 percent, by weight of units derived from one or more alpha-olefin comonomers. As used herein, the term "ethylene-based polymer" refers to a polymer that contains more than 50 mole percent of polymerized ethylene monomer (based on the total amount of polymerizable monomers) and, optionally, may contain at least one comonomer.

In embodiments herein where the ethylene-based polymer comprises at least one alpha-olefin comonomer, the alpha-olefin comonomers have no more than 20 carbon atoms. For example, the alpha-olefin comonomers may have 3 to 10 carbon atoms, or 3 to 8 carbon atoms. Exemplary alpha-olefin comonomers include, but are not limited to, propylene, 1-butene, 1-pentene, 1-hexene, 1-heptene, 1-octene, 1-nonene, 1-decene, and 4-methyl-1-pentene. The one or more alpha-olefin comonomers may, for example, be selected from the group consisting of propylene, 1-butene, 1-hexene, and 1-octene; or in the alternative, from the group consisting of 1-hexene and 1-octene. In embodiments herein, the ethylene-based polymer may or may not be a homopolymer, copolymer, or interpolymer.

The ethylene-based polymer can be made via gas-phase, solution-phase, or slurry polymerization processes, or any combination thereof, using any type of reactor or reactor configuration known in the art, e.g., fluidized bed gas phase reactors, loop reactors, stirred tank reactors, batch reactors in parallel, series, and/or any combinations thereof. In some embodiments, gas or solution reactors are used. Suitable ethylene-based polymers may be produced according to the processes described at pages 15-17 and 20-22 in WO 2005/111291 A1 or U.S. 2014/0248811. The catalysts used to make the ethylene-based polymer described herein may include Ziegler-Natta, metallocene, constrained geometry, single site catalysts, or combinations thereof. For example, the ethylene-based polymer may be a LLDPE, such as, a znLLDPE, which refers to linear polyethylene made using Ziegler-Natta catalysts, a uLLDPE or "ultra linear low density polyethylene," which may include linear polyethylenes made using Ziegler-Natta catalysts, or a mLLDPE, which refers to LLDPE made using metallocene or constrained geometry catalyzed polyethylene. Examples of suitable ethylene-based polymers may include ASPUN™ 6850 or ASPUN™ 6000, available from The Dow Chemical Company, 100-ZA25, available from Ineos Olefins and Polymers Europe, and M200056, available from Saudi Basic Industries Corporation, and MG9601S, available from Borealis AG.

In some embodiments, the ethylene-based polymer is prepared via a process comprising the steps of: (a) polymerizing ethylene and optionally one or more a-olefins in the presence of a first catalyst to form a semi-crystalline ethylene-based polymer in a first reactor or a first part of a multi-part reactor; and (b) reacting freshly supplied ethylene and optionally one or more $\alpha$-olefins in the presence of a second catalyst comprising an organometallic catalyst thereby forming an ethylene-based polymer composition in at least one other reactor or a later part of a multi-part reactor. Additional exemplary solution and gas phase polymerization processes may be found in U.S. 2014/024881.

In embodiments herein, the ethylene-based polymer may have a density of from 0.920 - 0.965 g/cc. All individual values and subranges are included and disclosed herein. For example, in some embodiments, the ethylene-based polymer may have a density of from a lower limit of 0.920, 0.925, 0.930, or 0.935 g/cc to an upper limit of 0.945, 0.950, 0.955, 0.960, or 0.965 g/cc. In one exemplary embodiment, the ethylene-based polymer may have a density of from 0.930 - 0.960 g/cc. In another exemplary embodiment, the ethylene-based polymer may have a density of from 0.935 - 0.955 g/cc.

In embodiments herein, the ethylene-based polymer may have a melt index, 12, of 0.5 to 150 g/10 minutes. All individual values and subranges are included and disclosed herein. For example, in some embodiments, the ethylene-based polymer may have a melt index, 12, of from a lower limit of 1.0, 2.0, 4.0, 5.0, 7.5, 10.0, 12.0, 14.0, or 15.0 g/10 minutes to an upper limit of 20, 23, 25, 28, 30, 35, 40, 50, 75, 100, 125, or 150 g/10 minutes. In one exemplary embodiment, the ethylene-based polymer may have a melt index, 12, of 5 to 80 g/10 minutes, 5 to 50 g/10 minutes, or 10 to 50 g/10 minutes. In another exemplary embodiment, the ethylene-based polymer may have a melt index, 12, of 5 to 35 g/10 minutes. In a further exemplary embodiment, the ethylene-based polymer may have a melt index, 12, of 15 to 35 g/10 minutes.

In embodiments herein, the ethylene-based polymer may have a molecular weight distribution (Mw/Mn) in the range of from 2 to 4. All individual values and subranges are included and disclosed herein. For example, in some embodiments, the ethylene-based polymer may have a molecular weight distribution (Mw/Mn) in the range of from 2.2 to 4, 2.5 to 4, 2.8 to 4, or 3 to 4.

The ethylene-based polymer may contain additives, such as, antistatic agents, color enhancers, dyes, lubricants, fillers, such as, TiO2 or CaCO3, opacifiers, nucleators, processing aids, pigments, primary antioxidants, secondary antioxidants, processing aids, UV stabilizers, anti-blocks, slip agents, tackifiers, fire retardants, anti-microbial agents, odor reducer agents, anti-fungal agents, and combinations thereof. The one or more additives can be included in the ethylene-based polymer at levels typically used in the art to achieve their desired purpose. In some examples, the one or more additives are included in amounts ranging from 0 to 10 wt% of the ethylene-based polymer, 0 to 5 wt% of the ethylene-based polymer, 0.001 to 5 wt% of the ethylene-based polymer, 0.001 to 3 wt% of the ethylene-based polymer, 0.05 to 3 wt% of the ethylene-based polymer, or 0.05 to 2 wt% of the ethylene-based polymer.

Second Region

The first region comprises a propylene-based polymer. As used herein, the term "propylene-based polymer" refers to a polymer that contains more than 50 mole percent of polymerized propylene monomer (based on the total amount of polymerizable monomers) and, optionally, may contain at least one comonomer. In some embodiments herein, the second region of the bicomponent filament may comprise from greater than 50 to 99, for example from 55 to 99, from 75 to 99, from 80 to 99, from 85 to 99, from 50 to 95, from 75 to 95, from 50 to 90, from 75 to 90, percent by weight, of an propylene-based polymer, based on the total amount of polymers present in the second region.

In embodiments herein, the propylene-based polymer is propylene homopolymer, a propylene copolymer, or a combination thereof. The polypropylene homopolymer may be isotactic, atactic, or syndiotactic. In some embodiments, the propylene-based polymer is an isotactic polypropylene homopolymer. In other embodiments, the propylene-based polymer is a propylene/olefin copolymer. The propylene/olefin copolymer may be random or block. The propylene/olefin copolymer comprises (a) less than or equal to 100 percent, for example, at least 70 percent, or at least 80 percent, or at least 90 percent, or at least 92 percent, or at least 95 percent, by weight of the units derived from propylene; and (b) less than 30 percent, for example, less than 25 percent, or less than 20 percent, or less than 10 percent, or less than 8 percent, or less than 5 percent, by weight of units derived from one or more alpha-olefin comonomers. In further embodiments, the propylene-based polymer may be a combination of one or more propylene homopolymers, one or more propylene copolymers, or a combination of one or more propylene homopolymers and one or more propylene copolymers.

In embodiments herein where the propylene-based polymer comprises at least one alpha-olefin comonomer, the alpha-olefin comonomers have no more than 20 carbon atoms. For example, the alpha-olefin comonomers may have 3 to 10 carbon atoms, or 3 to 8 carbon atoms. Exemplary alpha-olefin comonomers include, but are not limited to, ethylene, 1-butene, 1-pentene, 1-hexene, 1-heptene, 1-octene, 1-nonene, 1-decene, and 4-methyl-1-pentene. The one or more alpha-olefin comonomers may, for example, be selected from the group consisting of ethylene, 1-butene, 1-hexene, and 1-octene; or in the alternative, from the group consisting of ethylene. In embodiments herein, the propylene-based polymer may or may not be a homopolymer, copolymer, or interpolymer.

The propylene-based polymer can be made using any method for polymerizing propylene and, optionally, one comonomer. For example, gas phase, bulk or slurry phase, solution polymerization or any combination thereof can be used. Polymerization can be a one stage or a two or multistage polymerization process, carried out in at least one polymerization reactor. For two or multistage processes different combinations can be used, e.g. gas-gas phase, slurry-slurry phase, slurry-gas phase processes. Suitable catalysts can include Ziegler-Natta catalysts, a single-site catalyst (metallocene or constrained geometry), or non-metallocene, metal-centered, heteroaryl ligand catalysts, or combinations thereof. Exemplary propylene-based polymers may include metallocene polypropylenes, such as, ACHIEVE™ 3584, available from the Exxon Mobil Corporation, and LUMICENE™ MR 2001, available from Total Research & Technology Feluy; and Ziegler-Natta polypropylenes, such as, HG475FB, available from Borealis AG, MOPLEN™ HP2814, available from Lyondell Basell Industries Holdings, B.V., Sabic 518A, available from Saudi Basic Industries Corporation.

In embodiments herein, the propylene-based polymer has a melt flow rate (MFR) from 0.5 to 100 g/10 min, as determined according to ASTM D 1238 at 230°C and 2.16 kilograms. All individual values and subranges from 0.5 g/10 min to 100 g/10 min are included and disclosed herein. For example, in some embodiments, the propylene-based polymer has a melt flow rate from 5 to 85 g/10 min, 10 to 80 g/10 min, from 10 to 75 g/10 min, from 10 to 50 g/10 min, from 15 to 45 g/10 min, or from 20 g/10 min to 40 g/10 min. In embodiments herein, the propylene-based polymer may have a density of 0.900 to 0.910 g/cc, or from 0.900 to 0.905 g/cc. The density may be determined according to ASTM D-792.

The propylene-based polymer may contain additives, such as, antistatic agents, color enhancers, dyes, lubricants, fillers, such as, $TiO_2$ or $CaCO_3$, opacifiers, nucleators, processing aids, pigments, primary antioxidants, secondary antioxidants, processing aids, UV stabilizers, anti-blocks, slip agents, tackifiers, fire retardants, anti-microbial agents, odor reducer agents, anti-fungal agents, and combinations thereof. The one or more additives can be included in the propylene-based polymer at levels typically used in the art to achieve their desired purpose. In some examples, the one or more additives are included in amounts ranging from 0 to 10 wt% of the propylene-based polymer, 0 to 5 wt% of the propylene-based polymer, 0.001 to 5 wt% of the propylene-based polymer, 0.001 to 3 wt% of the propylene-based polymer, 0.05 to 3 wt% of the propylene-based polymer, or 0.05 to 2 wt% of the propylene-based polymer.

Compatibilizer

In embodiments herein, the first region and the second region are compatibilized with each other by the use of a compatibilizer. Without being bound by theory, it is believed that due to incompatibility between polyethylene and polypropylene, phase segregation can occur over time leading to delamination at the polyethylene-polypropylene interface (i.e., the first region-second region interface). In turn, this may result in decreased nonwoven abrasion resistance. It is believed that use of a compatibilizer in at least one of the first region or the second region may reduce phase segregation over time at the polyethylene-polypropylene interface (the first region-second region interface), thereby leading to improved nonwoven abrasion resistance. It is believed that the compatibilizer migrates to the interface between the first region and the second region to bring about compatibilization between the two regions.

In embodiments herein, the compatibilizer is a crystalline block composite. The crystalline block composite has (1) a crystalline ethylene-based polymer (CEP) (2) a crystalline alpha-olefin-based polymer (CAOP), and (3) a block copolymer having a crystalline ethylene block (CEB) and a crystalline alpha-olefin block (CAOB), wherein the crystalline ethylene block is essentially the same composition as the crystalline ethylene-based polymer and the crystalline alpha-olefin block is essentially the same composition as the crystalline alpha-olefin-based polymer. The crystalline ethylene-based polymer (CEP) can have an ethylene content of greater than 90 mol.%. The compositional split between the amount of CEP and CAOP will be essentially the same as that between the corresponding blocks in the block copolymer. The alpha-olefin content of the CAOP and the CAOB may be greater than 90 mol%. In exemplary embodiments, the alpha-olefin is propylene. For example, the CAOB and the CEB may be an iPP-EP (isotactic polypropylene and ethylenepropylene) diblock copolymer.

The crystalline block composite (CBC) includes the crystalline ethylene based polymer (CEP), the crystalline alpha-olefin based polymer (CAOP), and the block copolymer having the crystalline ethylene block (CEB) and the crystalline alpha-olefin block (CAOB), where the CEB is essentially the same composition as the CEP and the CAOB is essentially the same composition as the CAOP. The alpha-olefin may be referred to as the comonomer, and the amount of which accounts for a comonomer content. In the crystalline block composite, the alpha-olefin is at least one selected from the group of $C_{3-10}$ $\alpha$-olefins (e.g., may be propylene and/or butylene). The CAOP and the CAOB may have an alpha-olefin content that is greater than 90 mol%. The CEB comprises greater than 90 mol% of units derived from ethylene (i.e., ethylene content), and any remainder may be at least one selected from the group of $C_{3-10}$ $\alpha$-olefins as a comonomer (in an amount less than 10 mol%, less than 7 mol%, less than 5 mol%, less than 3 mol%, and the like.).

In exemplary embodiments, the CAOP includes propylene, e.g., greater than 90 mol% units derived from propylene and any remainder may be ethylene and/or at least one selected from the group of $C_{4-10}$ $\alpha$-olefins as a comonomer (in an amount less than 10 mol%, less than 7 mol%, less than 5 mol%, less than 4 mol%, less than 4 mol%, and the like.). When the CAOB includes propylene, as does the CAOP, it may additionally comprise ethylene as a comonomer. Further, the CEB and CEP may comprise propylene as a comonomer. The compositional split between the amount of CEP and CAOP will be essentially the same as that between the corresponding blocks in the block copolymer. The CEB and the CAOB may be referred to as hard (crystalline) segments/blocks.

In exemplary embodiments, the CAOB refers to highly crystalline blocks of polymerized alpha olefin units in which the monomer that is one of $C_{3-10}$ $\alpha$-olefins (such as propylene) is present in an amount greater than 93 mol%, greater than 95 mol%, and/or greater than 96 mol%. In other words, the comonomer content (e.g., ethylene content) in the CAOBs is less than less than 7 mol%, less than 5 mol%, and/or less than 4 mol%. CAOBs with propylene crystallinity may have corresponding melting points that are 80°C and above, 100°C and above, 115°C and above, and/or 120°C and above. In exemplary embodiments, CEB refers to blocks of polymerized ethylene units in which the comonomer content (such as propylene) is 7 mol% or less, between 0 mol% and 5 mol%, and/or between 0 mol% and 3 mol%. In exemplary embodiments, the CAOB comprise all or substantially all propylene units. Such CEBs may have corresponding melting points that are 75°C and above, 90°C and above, and/or 100°C and above.

In exemplary embodiments, the crystalline block composite may have a total ethylene content that is from 40 wt% to 70 wt% (e.g., 40 wt% to 65 wt%, 45 wt% to 65 wt%, 45 wt% to 60 wt%, 50 wt% to 55 wt%, and the like.), based on the total weight of the crystalline block composite. The remainder of the total weight of the crystalline block composite may be accounted for by units derived from at least one $C_{3-10}$ $\alpha$-olefin (referring to a comonomer content). For example, the remainder of the total weight may be accounted for by units derived from propylene.

The crystalline block composite may include from 0.5 wt% to 95.0 wt% CEP, from 0.5 wt% to 95.0 wt% CAOP, and from 5.0 wt% to 99.0 wt% of the crystalline block composite. For example, the crystalline block composite may include from 5.0 wt% to 80.0 wt% CEP, from 5.0 wt% to 80.0 wt% CAOP, and from 20.0 wt% to 90.0 wt% of the crystalline block composite. Weight percents are based on total weight of crystalline block composite. The sum of the weight percents of CEP, CAOP, and the crystalline block composite equals 100%. An exemplary measurement of the relative amount of the crystalline block composite is referred to as the Crystalline Block Composite Index (CBCI), as discussed in U.S. Patent Nos. 8,785,554, 8,822,598, and 8,822,599. The CBCI for the crystalline block composite is greater than 0 and less than 1.0. For example, the CBCI is from 0.20 to 0.99, from 0.30 to 0.99, from 0.40 to 0.99, from 0.40 to 0.90, from 0.40 to 0.85, from 0.50 to 0.80, and/or from 0.55 to 0.75.

The crystalline block composite may have, a Tm greater than 90°C (e.g., for both a first peak and a second peak), a Tm greater than 100 °C (e.g., for both a first peak and a second peak), and/or greater than 120 °C (e.g., for at least one of a first peak and a second peak). For example, the Tm is in the range of from 100 °C to 250 °C, from 110 °C to 220 °C, and/or from 115 °C to 220 °C. According to an exemplary embodiment, the crystalline block composite exhibits a second peak Tm in a range from 100 °C to 130 °C (e.g., 100 °C to 120 °C, 100 °C to 110 °C, and the like.) and a first peak Tm in a range from 110 °C to 150 °C (e.g., 110 °C to 140 °C, 115 °C to 130 °C, 115 °C to 125 °C, and the like.), in which the second peak Tm is less than the first peak Tm.

Crystalline block composites may be differentiated from conventional, random copolymers, physical blends of polymers, and block copolymers prepared via sequential monomer addition. The crystalline block composites may be differentiated from random copolymers and from a physical blend by characteristics such as crystalline block composite index, better tensile strength, improved fracture strength, finer morphology, improved optics, and/or greater impact strength at lower temperature. The crystalline block composites may be differentiated from block copolymers prepared by sequential monomer addition by molecular weight distribution, rheology, shear thinning, rheology ratio, and block polydispersity. A unique feature of crystalline block composites is that they cannot be fractionated by conventional means by solvent or temperature such as xylene fractionation, solvent/non-solvent, or temperature rising elution fractionation or crystallization elution fractionation since the individual blocks of the block copolymer are crystalline.

When produced in a continuous process, the crystalline block composites desirably possess PDI from 1.7 to 15 (e.g., from 1.8 to 10, from 2.0 to 5, and/or from 2.5 to 4.8). Exemplary crystalline block composites are described in, e.g., U.S. Patent Application Publication Nos. 2011-0313106, 2011-0313107, and 2011-0313108, all published on Dec. 22, 2011. In exemplary embodiments, the crystalline block composite may have a molecular weight distribution (MWD), defined as weight average molecular weight divided by number average molecular weight ($M_w/M_n$) of 5.0 or less, from 3.0 to 4.8, and/or from 3.0 to 4.0.

The crystalline block composite polymers may be prepared by a process comprising contacting an addition polymerizable monomer or mixture of monomers under addition polymerization conditions with a composition comprising at least one addition polymerization catalyst, at least one cocatalyst, and a chain shuttling agent, said process being characterized by formation of at least some of the growing polymer chains under differentiated process conditions in two or more reactors operating under steady state polymerization conditions or in two or more zones of a reactor operating under plug flow polymerization conditions. The term, "shuttling agent" refers to a compound or mixture of compounds that is capable of causing polymeryl exchange between at least two active catalyst sites under the conditions of the polymerization. That is, transfer of a polymer fragment occurs both to and from one or more of the active catalyst sites. In contrast to a shuttling agent, a "chain transfer agent" causes termination of polymer chain growth and amounts to a one-time transfer of growing polymer from the catalyst to the transfer agent. In a preferred embodiment, the block composites and crystalline block composites comprise a fraction of block polymer which possesses a most probable distribution of block lengths.

Suitable processes useful in producing the crystalline block composites may be found, e.g., in U.S. Patent Application Publication No. 2008/0269412, published on Oct. 30, 2008. In particular, the polymerization is desirably carried out as a continuous polymerization, preferably a continuous, solution polymerization, in which catalyst components, monomers, and optionally solvent, adjuvants, scavengers, and polymerization aids are continuously supplied to one or more reactors or zones and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. The chain shuttling agent(s) may be added at any point during the polymerization including in the first reactor or zone, at the exit or slightly before the exit of the first reactor, or between the first reactor or zone and the second or any subsequent reactor or zone. Due to the difference in monomers, temperatures, pressures or other difference in polymerization conditions between at least two of the reactors or zones connected in series, polymer segments of differing composition such as comonomer content, crystallinity, density, tacticity, regio-regularity, or other chemical or physical difference, within the same molecule are formed in the different reactors or zones. The size of each segment or block is determined by continuous polymer reaction conditions, and preferably is a most probable distribution of polymer sizes.

For example, when producing a block copolymer having the crystalline ethylene block (CEB) and the crystalline alpha-olefin block (CAOB) in two reactors or zones it is possible to produce the CEB in the first reactor or zone and the CAOB in the second reactor or zone or to produce the CAOB in the first reactor or zone and the CEB in the second reactor or zone. It may be more advantageous to produce CEB in the first reactor or zone with fresh chain shuttling agent added. The presence of increased levels of ethylene in the reactor or zone producing CEB may lead to much higher molecular weight in that reactor or zone than in the zone or reactor producing CAOB. The fresh chain shuttling agent will reduce the MW of polymer in the reactor or zone producing CEB thus leading to better overall balance between the length of the CEB and CAOB segments.

When operating reactors or zones in series it is necessary to maintain diverse reaction conditions such that one reactor produces CEB and the other reactor produces CAOB. Carryover of ethylene from the first reactor to the second reactor (in series) or from the second reactor back to the first reactor through a solvent and monomer recycle system is preferably minimized. There are many possible unit operations to remove this ethylene, but because ethylene is more volatile than higher alpha olefins one simple way is to remove much of the unreacted ethylene through a flash step by reducing the pressure of the effluent of the reactor producing CEB and flashing off the ethylene. A more preferable approach is to avoid additional unit operations and to utilize the much greater reactivity of ethylene versus higher alpha olefins such that the conversion of ethylene across the CEB reactor approaches 100%. With respect to the CAOB, the overall conversion of monomers across the reactors may be controlled by maintaining the alpha-olefin conversion at a high level (90 to 95%). Exemplary catalysts and catalyst precursors for use to from the crystalline block composite include metal complexes such as disclosed in WO2005/090426.

The crystalline block composite may have a weight average molecular weight (Mw) from 10,000 g/mol to 2,500,000 g/mol, from 35000 g/mol to 1,000,000 g/mol, from 50,000 g/mol to 300,000 g/mol, and/or from 50,000 g/mol to 200,000 g/mol. For example, the Mw may be from 20 kg/mol to 1000 kg/mol, from 50 kg/mol to 500 kg/mol, and/or from 80 kg/mol to 125 kg/mol.

The MFR (melt flow rate) of the crystalline block composites may be from 0.1 to 1000 dg/min (230°C/2.16 kg), from 1 to 500 dg/min (230°C/2.16 kg), from 5 to 100 g/10 min, from 5 to 50 g/ 10 min, or from 9 to 40 g/10 min at 230°C and 2.16 kg, when measured as per ASTM D 1238.

The compatibilizer may be present in at least one of the first region or the second region. In some embodiments, the compatibilizer is present only in the first region in an amount of 1 to less than 50 wt.%, 2 to 45 wt.%, 2 to 40 wt.5, 2 to 35 wt.%, 2 to 30 wt.%, 5 to 35 wt.%, 5 to 30 wt.%, 5 to 25 wt.%, or 5 to 20 wt.%, based on the total weight of polymers present in the first region. In other embodiments, the compatibilizer may be present only in the second region in an amount of from 1 wt.% to less than 50 wt.%, 2 to 45 wt.%, 2 to 40 wt.5, 2 to 35 wt.%, 2 to 30 wt.%, 5 to 35 wt.%, 5 to 30 wt.%, 5 to 25 wt.%, or 5 to 20 wt.%, based on the total weight of polymers present in the second region. In further embodiments, the compatibilizer may be simultaneously present in the first region and in the second region in an amount of from 1 wt.% to less than 50 wt.%, 2 to 45 wt.%, 2 to 40 wt.5, 2 to 35 wt.%, 2 to 30 wt.%, 5 to 35 wt.%, 5 to 30 wt.%, 5 to 25 wt.%, or 5 to 20 wt.%, based on the total weight of polymers present in the first region and the second region.

## Bicomponent Filaments & Nonwoven Fabrics

Bicomponent filaments described herein may be produced by melt spinning processes that include staple fiber spinning (including short spinning, and long spinning). In some embodiments, the bicomponent filaments may be made by blending a composition comprising an ethylene-based polymer, a propylene-based polymer, and a compatibilizer, and extruding the composition to form a bicomponent filament, wherein the bicomponent filament comprises a first region comprising the ethylene-based polymer, a second region comprising the propylene-based polymer, and the compatibilizer is present in at least one of the first region or the second region. The ethylene-based polymer, propylene-based polymer, and compatibilizer have been previously described herein.

The resulting cross-section of the bicomponent filament may resemble a variety of different configurations. For example, the first region and the second region of the bicomponent filament may be arranged in the form of a sheath/core, tipped tri-lobal fibers, segmented cross, side-by-side, conjugate, islands in the sea, or a segmented pie. In some embodiments, the first region and the second region of the bicomponent filament may be arranged in the form of a sheath/core, tipped tri-lobal fibers, segmented cross, side-by-side, conjugate, islands in the sea, or a segmented pie, and at least one outer surface of the bicomponent filament comprises an ethylene-based polymer blended with the crystalline block composite compatibilizer.

In some embodiments, the first region and the second region of the bicomponent filament may have a sheath-core structure, respectively. The sheath layer is disposed on the core and surrounds the circumferential surface of the core. The core to sheath weight ratio may range from 50:50 to 90:10, 60:40 to 90:10, or 65:35 to 90:10. The use of an ethylene-based polymer in the sheath can improve the softness or haptics of a nonwoven fabric. Conversely, nonwoven fabric comprising filaments made only from higher modulus polymers, such as, a polypropylene homopolymer, can provide different haptics and are often considered less soft. However, fabrics comprised of ethylene-based polymers in the sheath can suffer from reduced resistance to abrasion compared to fabrics made from only polypropylene. While haptics are not easily quantified, they can be evaluated using sensory panels. Sensory panelists can be asked to rank various samples according to attributes such as "smoothness"; "cloth-like"; "stiffness" and "noise intensity". A more objective test involves the use of a commercially available device known as "Handle-O-Meter". The "Handle-O-Meter" is a commercially available apparatus from the Thwing-Albert Company.

The bicomponent filaments described herein may be used to form nonwoven fabrics. Nonwoven fabrics can be manufactured by various methods generally known in the art, examples of which are described in, for example, "Introduction to Nonwoven Technologies" by Batra, Subhash and Pourdeyhimi, Bahnam, 2012, and "Polyolefin Fibres: Industrial and Medical Applications," S. C. O. Ugbolue, 2009. As used herein, the term "nonwoven web" or "nonwoven fabric" or "nonwoven", refers to a web that has a structure of individual fibers or filaments, which are interlaid, but not in any regular, repeating manner.

The nonwoven web may comprise a single web, such as, a spunbond web, a carded web, an airlaid web, a spunlaced web, or a meltblown web. "Meltblown" refers to the process of extruding a molten thermoplastic material through a plurality of fine, usually circular, die capillaries as molten threads or filaments into a high velocity gas (e.g., air) stream which attenuates the filaments of molten thermoplastic material to reduce their diameter to that of a microfiber diameter. Thereafter, the meltblown fibers are carried by the high velocity gas stream and are deposited on a collecting surface to form a web of randomly dispersed meltblown fibers. "Spunbonded" refers to the process of extruding a molten thermoplastic material as filaments from a plurality of fine, usually circular, capillaries of a spinneret with the diameter of the extruded filaments then being rapidly reduced by drawing the fibers and collecting the fibers on a substrate.

Because of the relative strengths and weaknesses associated with the different processes and materials used to make nonwoven fabrics, composite structures of more than one layer are often used in order to achieve a better balance of properties. Such structures are often identified by letters designating the various lays such as SM for a two layer structure consisting of a spunbond layer and a meltblown layer, SMS for a three layer structure, or more generically $S_nX_nS_n$ structures, where "X" can be independently a spunbond layer, a carded layer, an airlaid layer, a spunlaced layer, or a meltblown layer and "n" can be any number, although for practical purposes is generally less than 5. In order to maintain structural integrity of such composite structures, the layers must be bonded together. Common methods of bonding include thermal calendar point bonding, adhesive lamination, ultrasonic bonding, and other methods known to those skilled in the art. All of these structures may be used in the present invention.

In some embodiments, where the nonwoven may comprise bicomponent filaments having a core/sheath configuration, and where the propylene-based polymers used in the core have a higher melting point than the ethylene-based polymers used in the sheath, the sheath may provide a lower bonding temperature for the nonwoven in thermal calendaring operations. The sheath may also provide other properties to the nonwoven, such as, softness or certain haptic properties, while the core layer may provide other properties, such as, tensile strength. In addition, since the propylene-based polymers used in the core have a higher melting point than the ethylene-based polymers used in the sheath layer, the propylene-based polymers used in the core do not completely melt/flow and can provide a level of integrity and strength to the nonwoven.

In some embodiments, the nonwovens can also be laminates such as spunbond layers and some meltblown layers, such as a spunbond/meltblown/spunbond (SMS) laminate and others as disclosed in U.S. Pat. No. 4,041,203 to Brock et al., U.S. Pat. No. 5,169,706 to Collier, et al., U.S. Pat. No. 5,145,727 to Potts et al., U.S. Pat. No. 5, 178,931 to Perkins et al., and U.S. Pat. No. 5,188,885 to Timmons et al. The nonwoven may be an elastic nonwoven comprised of elastic materials or an extensible nonwoven, such as, spunlaced materials which are hydroentangled spun-melt nonwovens. The nonwoven may be inelastic, but elongatable or extensible. Such inelastic nonwovens may be used in elastic laminates by bonding them to the elastic film while the elastic film is in a stretched condition so that when the elastic film is allowed to retract the nonwoven gathers or puckers between the portions where the nonwoven is bonded to the elastic film creating corrugations in the nonwovens. This live stretch process of lamination is described in U.S. Pat. No. 4,720,415. Other means of corrugating nonwovens are available commercially, such as those supplied by Micrex. Extensible, but inelastic nonwovens can also be used in elastic laminates through a process described as incremental stretching. In these processes, the elastic film and extensible but non-elastic nonwoven are joined in the unstretched state. The laminate is then subjected to stretching or tension as described in U.S. Pat. Nos. 5,167,897, 4,107,364, 4,209,463, and 4,525,407. When the tension is released on the web the nonwoven is permanently deformed in the areas where it was stretched and does not go back to its original shape so that the elastic laminate is now able to stretch and recover without significant constraint from the nonwoven in the areas where it has been pre-stretched.

In some embodiments, a laminate having an SMS structure - i.e., a meltblown nonwoven fabric layer disposed between two spunbond nonwoven fabric layers may be manufactured for use in a variety of different articles. The spunbond nonwoven fabric comprises bicomponent filaments as described herein, while the meltblown nonwoven fabric comprises monocomponent fibers that may comprise propylene-based polymers. The presence of the compatibilizer in the fibers of the spunbond layer may facilitate adhesion with the propylene-based polymer in the meltblown layer to produce a unique product having a synergistic combination of tensile strength, softness, and barrier properties.

The combination of spunbond and meltblown layers in a laminate can facilitate improved barrier properties, which is important for applications, such as, leg cuffs in hygiene absorbent products, e.g., diapers, training pants, or adult incontinence products, medical drapes and gowns, or face masks. The presence of an ethylene-based polymer in the sheath improves the softness or haptics of the non-woven laminate and the presense of the compatibilizer in the sheath or in the sheath and core enables improved abrasion resistance of the spunbond non-woven. SMS laminates manufactured in this manner display an optimal combination of softness, barrier properties, abrasion resistance and laminate tensile strength. A plurality of spunbond and meltblown layers may be bonded in this manner. In other words, a laminate having a structure of $(SM)_x$, where x can be any integer greater than or equal to 2 may be manufactured for use. The laminate structure may be made by depositing a nonwoven fabrics in series: first depositing a spunbond fabric onto a conveyor belt, followed by a meltblown fabric, and then another spunbond fabric. The layers may be bonded to one another through a variety of means including thermal calendar bonding or ultrasonic bonding.

TEST METHODS

A discussion of the methods used herein may also be found in, e.g., U.S. Patent No. 8,822,599. Test methods include the following:

Density

Samples are prepared according to ASTM D-1928. Measurements are made within one hour of sample pressing using ASTM D-792, Method B.

Melt Index

Melt index, or $I_2$, is measured in accordance with ASTM-D 1238, condition 190°C/2.16 kg, and is reported in grams eluted per 10 minutes.

Melt Flow Rate

Melt Flow Rate (MFR) is measured according to ASTM-D1238, condition 230°C/2.16 kg. The result is reported in grams/10 minutes.

Tensile Testing

Tensile testing (including Elongation at Break in the machine direction (MD) and cross direction (CD) and Tensile Strength in the machine direction (MD) and cross direction (CD)) is performed according to DIN EN ISO 29073: 1992-08.

High Temperature Liquid Chromatography (HTLC)

HTLC is performed according to the methods disclosed in US Patent Application Publication No. 2010-0093964 and US Patent Application No. 12/643111, filed December 21, 2009. Samples are analyzed by the methodology described below.

A Waters GPCV2000 high temperature SEC chromatograph was reconfigured to build the HT-2DLC instrumentation. Two Shimadzu LC-20AD pumps were connected to the injector valve in GPCV2000 through a binary mixer. The first dimension (D1) HPLC column was connected between the injector and a 10-port switch valve (Valco Inc). The second dimension (D2) SEC column was connected between the 10-port valve and LS (Varian Inc.), IR (concentration and composition), RI (refractive index), and IV (intrinsic viscosity) detectors. RI and IV were built-in detector in GPCV2000. The IR5 detector was provided by PolymerChar, Valencia, Spain.

**Columns:** The D1 column was a high temperature Hypercarb graphite column (2.1 × 100 mm) purchased from Thermo Scientific. The D2 column was a PLRapid-H column purchased from Varian (10 × 100 mm).

**Reagents:** HPLC grade trichlorobenzene (TCB) was purchased from Fisher Scientific. 1-Decanol and decane were from Aldrich. 2,6-Di-*tert*-butyl-4-methylphenol (Ionol) was also purchased from Aldrich.

**Sample Preparation:** 0.01 - 0.15 g of polyolefin sample was placed in a 10-mL Waters autosampler vial. 7-mL of either 1-decanol or decane with 200 ppm Ionol was added to the vial afterwards. After sparging helium to the sample vial for about 1 min, the sample vial was put on a heated shaker with temperature set at 160 °C. The dissolution was done by shaking the vial at the temperature for 2 hr. The vial was then transferred to the autosampler for injection. Please note that the actual volume of the solution was more than 7 mL due to the thermal expansion of the solvent.

**HT-2DLC:** The D1 flow rate was at 0.01 mL/min. The composition of the mobile phase was 100% of the weak eluent (1-decanol or decane) for the first 10 min of the run. The composition was then increased to 60% of strong eluent (TCB) in 489 min. The data were collected for 489 min as the duration of the raw chromatogram. The 10-port valve switched every three minutes yielding 489/3 = 163 SEC chromatograms. A post-run gradient was used after the 489 min data acquisition time to clean and equilibrate the column for the next run:

Clean step:

490 min: flow = 0.01 min; // Maintain the constant flow rate of 0.01 mL/min from 0 - 490 min.
491 min: flow = 0.20 min; // Increase the flow rate to 0.20 mL/min.
492 min: %B = 100; // Increase the mobile phase composition to 100% TCB
502 min: % B = 100; // Wash the column using 2 mL of TCB

Equilibrium step:

503 min: %B = 0; // Change the mobile phase composition to 100% of 1-decanol or decane
513 min: %B = 0; // Equilibrate the column using 2 mL of weak eluent
514 min: flow = 0.2 mL/min; // Maintain the constant flow of 0.2 mL/min from 491 - 514 min
515 min: flow = 0.01 mL/min; // Lower the flow rate to 0.01 mL/min.

After step 8, the flow rate and mobile phase composition were the same as the initial conditions of the run gradient. The D2 flow rate was at 2.51 mL/min. Two 60 μL loops were installed on the 10-port switch valve. 30- μL of the eluent from D1 column was loaded onto the SEC column with every switch of the valve.

The IR, LS15 (light scattering signal at 15°), LS90 (light scattering signal at 90°), and IV (intrinsic viscosity) signals were collected by EZChrom through a SS420X analogue-to-digital conversion box. The chromatograms were exported in ASCII format and imported into a home-written MATLAB software for data reduction. Using an appropriate calibration curve of polymer composition and retention volume, of polymers that are of similar nature of the CAOB and CEB polymers being analyzed. Calibration polymers should be narrow in composition (both molecular weight and chemical composition) and span a reasonable molecular weight range to cover the composition of interest during the analysis. Analysis of the raw data was calculated as follows, the first dimension HPLC chromatogram was reconstructed by plotting the IR signal of every cut (from total IR SEC chromatogram of the cut) as a function of the elution volume. The IR vs. D1 elution volume was normalized by total IR signal to obtain weight fraction vs. D1 elution volume plot. The IR methyl/measure ratio was obtained from the reconstructed IR measure and IR methyl chromatograms. The ratio was converted to composition using a calibration curve of PP wt.% (by NMR) vs. methyl/measure obtained from SEC experiments. The MW was obtained from the reconstructed IR measure and LS chromatograms. The ratio was converted to MW after calibration of both IR and LS detectors using a PE standard.

Differential Scanning Calorimetry (DSC)

Differential Scanning Calorimetry is performed on a TA Instruments Q1000 DSC equipped with an RCS cooling accessory and an auto sampler. A nitrogen purge gas flow of 50 ml/min is used. The sample is pressed into a thin film and melted in the press at about 230°C and then air-cooled to room temperature (25°C). About 3-10 mg of material is then cut, accurately weighed, and placed in a light aluminum pan (ca 50 mg) which is later crimped shut. The thermal behavior of the sample is investigated with the following temperature profile: the sample is rapidly heated to 230°C and held isothermal for 3 minutes in order to remove any previous thermal history. The sample is then cooled to -90°C at 10°C/min cooling rate and held at -90°C for 3 minutes. The sample is then heated to 230°C at 10°C/min heating rate. The cooling and second heating curves are recorded.

$^{13}$C Nuclear Magnetic Resonance (NMR)

Sample Preparation - The samples are prepared by adding approximately 2.7g of a 50/50 mixture of tetrachloroethane-d2/orthodichlorobenzene that is 0.025M in chromium acetylacetonate (relaxation agent) to 0.21g sample in a 10mm NMR tube. The samples are dissolved and homogenized by heating the tube and its contents to 150°C.
Data Acquisition Parameters - The data is collected using a Bruker 400 MHz spectrometer equipped with a Bruker Dual DUL high-temperature CryoProbe. The data is acquired using 320 transients per data file, a 7.3 sec pulse repetition delay (6 sec delay + 1.3 sec acq. time), 90 degree flip angles, and inverse gated decoupling with a sample temperature of 125°C. All measurements are made on non spinning samples in locked mode. Samples are homogenized immediately prior to insertion into the heated (130°C) NMR Sample changer, and are allowed to thermally equilibrate in the probe for 15 minutes prior to data acquisition. Comonomer content in the crystalline block composite polymers is measurable using this technique.

Gel Permeation Chromatography (GPC)

The gel permeation chromatographic system consists of either a Polymer Laboratories Model PL-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.
Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polypropylene} = 0.645(M_{polystyrene})$.
Polypropylene equivalent molecular weight calculations are performed using Viscotek TriSEC software Version 3.0.

Fuzz Level

Fuzz level is determined on a Sutherland 2000 Ink Rub Tester. An 11.0 cm x 4.0cm piece of nonwoven is abraded with sandpaper according to ISO POR 01 106 (a cloth sandpaper aluminum oxide 320-grit is affixed to a 2 lb. weight, and rubbed for 20 cycles at a rate of 42 cycles per minute) so that loose fibers are accumulated on the top of the laminate. The loose fibers are collected using tape and measured gravimetrically. The fuzz level is then determined as the total weight of loose fiber in grams divided by the laminate specimen surface area (44.0 cm$^2$).

EXAMPLES

These examples were conducted to demonstrate the preparation of bicomponent filaments that can be used in the manufacture of nonwovens. The bicomponent filaments have an ethylene-based polymer sheath layer disposed on a core that contains a propylene-based polymer.

Preparation of Crystalline Block Composite

The Crystalline Block Composites (CBC1 and CBC2) are prepared using two continuous stirred tank reactors (CSTR) connected in series. The first reactor is approximately 12 gallons in volume while the second reactor is approximately 26 gallons. Each reactor is hydraulically full and set to operate at steady state conditions. Monomers, Solvent, Catalyst, Cocatalyst-1, Cocatalyst-2, and CSA-1 are flowed to the first reactor according to the process conditions outlined in Table 1. Then, the first reactor contents, as described in Table 1, below, are flowed to a second reactor in series. Additional Catalyst, Cocatalyst-1, and Cocatalyst-2 are added to the second reactor. Table 2, below, shows the analytical characteristics of the CBC's.

In particular, Catalyst-1 ([[rel-2',2'''-[(1R,2R)-1,2-cylcohexanediylbis(methyleneoxy-κO)] bis[3-(9H-carbazol-9-yl)-5-methyl[1,1'-biphenyl]-2-olato-κO]](2-)]dimethyl-hafnium) and Cocatalyst-1, a mixture of methyldi($C_{14-18}$ alkyl)ammonium salts of tetrakis(pentafluorophenyl)borate, prepared by reaction of a long chain trialkylamine (Armeen™ M2HT, available from Akzo-Nobel, Inc.), HCl and Li[B($C_6F_5$)$_4$], substantially as disclosed in USP 5,919,983, Ex. 2., are purchased from Boulder Scientific and used without further purification. CSA-1 (diethylzinc or DEZ) and cocatalyst-2 (modified methylalumoxane (MMAO)) are purchased from Akzo Nobel and used without further purification.

The Solvent for the polymerization reaction is a hydrocarbon mixture (ISOPAR®E) obtainable from ExxonMobil Chemical Company and purified through beds of 13-X molecular sieves prior to use. Referring to Table 1, the process conditions for producing the CBC2 are shown.

Table 1 - Reactor Conditions

| Material | CBC2 | |
| --- | --- | --- |
| Reactor | 1st Reactor | 2nd Reactor |
| Reactor Control Temp.(°C) | 153 | 136 |
| Solvent Feed (lb/hr) | 441 | 376 |
| Propylene Feed (lb/hr) | 6.9 | 77.0 |
| Ethylene Feed (lb/hr) | 70.6 | 0 |
| Hydrogen Feed SCCM) | 0 | 0 |
| Reactor Ethylene Conc. (g/L) | 1.68 | 0.02 |
| Reactor Propylene Conc. (g/L) | 0.34 | 2.95 |
| Catalyst Efficiency (gPoly/gM) *1.0E6 | 0.21 | 0.09 |
| Catalyst Flow (lb/hr) | 0.73 | 1.65 |
| Catalyst Conc. (ppm) | 500 | 500 |
| Cocatalyst-1 Flow (lb/hr) | 0.73 | 1.65 |
| Cocatalyst-1 Conc. (ppm) | 4693 | 4693 |
| Cocatalyst-2 Flow (lb/hr) | 0.84 | 0.63 |
| Cocatatlyst-2 Conc. (ppm) | 1995 | 1995 |
| DEZ Flow (lb/hr) | 2.34 | 0 |
| DEZ Conc. (ppm) | 49989 | 0 |

Table 2 - CBC Characterization Data

| CBC | MFR | Wt.% PP from HTLC Separation | Mw (Kg/mol) | Mw/Mn | Total wt% $C_2$* | Tm (°C) Peak 1 (Peak 2) | Tc (°C) | Melt Enthalpy (J/g) | CBCI |
|------|------|------|------|------|------|------|------|------|------|
| CBC1 | 9.8 | 19.9 | 103.6 | 2.73 | 47.6 | 107.9 (130.0) | 87.8 | 95 | 0.549 |
| CBC2 | 37.6 | 14.8 | 73.9 | 3.74 | 46.7 | 130 (103) | 92 | 92 | 0.697 |

Calculation of Composition of Crystalline Block Composite a summation of the weight % propylene from each component in the polymer according to equation 1 results in the overall weight % propylene and/or ethylene (of the whole polymer). This mass balance equation can be used to quantify the amount of the polypropylene (PP) and polyethylene (PE) present in the block copolymer. This mass balance equation can also be used to quantify the amount of PP and PE in a binary blend or extended to a ternary or n-component blend. For the crystalline block composite, the overall amount of PP or PE is contained within the blocks present in the block and the unbound PP and PE polymers.

$$\mathrm{Wt\%C3}_{\mathrm{Overall}} = \mathrm{w}_{\mathrm{PP}}(wt\%C3_{PP}) + \mathrm{w}_{\mathrm{PE}}(wt\%C3_{PE}) \qquad \mathrm{Eq.\ 1}$$

where

$w_{pp}$ = weight fraction of PP in the polymer
$w_{PE}$ = weight fraction of PE in the polymer
wt%C3pp = weight percent of propylene in PP component or block
wt%C3$_{PE}$ = weight percent of propylene in PE component or block.

Note that the overall weight % of propylene ($C_3$) is preferably measured from $C^{13}$ NMR or some other composition measurement that represents the total amount of $C_3$ present in the whole polymer. The weight % propylene in the PP block (wt%C3$_{PP}$) is set to 100 or if otherwise known from its DSC melting point, NMR measurement, or other composition estimate, that value can be put into its place. Similarly, the weight % propylene in the PE block (wt%C3$_{PE}$) is set to 100 or if otherwise known from its DSC melting point, NMR measurement, or other composition estimate, that value can be put into its place.

Crystalline Block Composite Index (CBCI) is measured based on the method shown in Table 3, below. In particular, CBCI provides an estimate of the quantity of block copolymer within the crystalline block composite under the assumption that the ratio of CEB to CAOB within a diblock copolymer is the same as the ratio of crystalline ethylene to crystalline alpha-olefin in the overall crystalline block composite. This assumption is valid for these statistical olefin block copolymers based on the understanding of the individual catalyst kinetics and the polymerization mechanism for the formation of the diblocks via chain shuttling catalysis as described in the specification. This CBCI analysis shows that the amount of isolated PP is less than if the polymer was a simple blend of a propylene homopolymer (in this example the CAOP) and polyethylene (in this example the CEP). Consequently, the polyethylene fraction contains an appreciable amount of propylene that would not otherwise be present if the polymer was simply a blend of polypropylene and polyethylene. To account for this "extra propylene", a mass balance calculation can be performed to estimate the CBCI from the amount of the polypropylene and polyethylene fractions and the weight percent propylene present in each of the fractions that are separated by high temperature liquid chromatography (HTLC). CBCI is calculated as shown in Table 3 based on the following:

Table 3

| Line # | Variable | Source | CBC1 | CBC2 |
|------|------|------|------|------|
| 1 | Overall wt% C3 Total | Measured | 52.400 | 52.4 |
| 2 | wt% C3 in PP block/polymer | Measured | 99.000 | 99 |
| 3 | wt% C3 in PE block/polymer | Measured | 10.500 | 8.0 |
| 4 | wt fraction PP (in block or polymer) | Eq. 2 below | 0.500 | 0.488 |
| 5 | wt fraction PE (in block or polymer) | 1-Line 4 | 0.500 | 0.512 |
| | Analysis of HTLC Separation | | | |

(continued)

| Line # | Variable | Source | CBC1 | CBC2 |
|---|---|---|---|---|
| 6 | wt fraction isolated PP | Measured | 0.199 | 0.148 |
| 7 | wt fraction PE fraction | Measured | 0.801 | 0.852 |
| 8 | wt% C3 in PE-fraction | Eq. 4 below | 40.823 | 44.3 |
| 9 | wt fraction PP-diblock in PE fraction | Eq. 6 below | 0.343 | 0.399 |
| 10 | wt fraction PE in PE fraction | 1-Line 10 | 0.657 | 0.601 |
| 11 | wt fraction Diblock in PE fraction | 10/Line 4 | 0.685 | 0.818 |
| 12 | Crystalline Block Composite Index (CBCI) | Eq. 7 below | 0.549 | 0.697 |

Referring to Table 3, above, crystalline block composite index (CBCI) is measured by first determining a summation of the weight percent propylene from each component in the polymer according to Equation 1, below, which results in the overall weight percent, as discussed above with respect to the Methods for Calculation of Composition of Crystalline Block Composite. In particular, the mass balance equation is as follows:

$$Wt\%C3_{Overall} = w_{PP}(wt\%C3_{PP}) + w_{PE}(wt\%C3_{PE}) \qquad Eq. \ 1$$

where

$w_{pp}$ = weight fraction of PP in the polymer
$w_{PE}$ = weight fraction of PE in the polymer
wt%C3pp = weight percent of propylene in PP component or block
wt%C3$_{PE}$ = weight percent of propylene in PE component or block

For calculating the Ratio of PP to PE in the crystalline block composite:

Based on Equation 1, the overall weight fraction of PP present in the polymer can be calculated using Equation 2 from the mass balance of the total C3 measured in the polymer. Alternatively, it could also be estimated from a mass balance of the monomer and comonomer consumption during the polymerization. Overall, this represents the amount of PP and PE present in the polymer regardless of whether it is present in the unbound components or in the diblock copolymer. For a conventional blend, the weight fraction of PP and weight fraction of PE corresponds to the individual amount of PP and PE polymer present. For the crystalline block composite, it is assumed that the ratio of the weight fraction of PP to PE also corresponds to the average block ratio between PP and PE present in this statistical block copolymer.

$$w_{PP} = \frac{wt\%C3_{Overall} - wt\%C3_{PE}}{wt\%C3_{PP} - wt\%C3_{PE}} \qquad Eq. \ 2$$

where

$w_{PP}$ = weight fraction of PP present in the whole polymer
wt%C3$_{PP}$ = weight percent of propylene in PP component or block
wt%C3$_{PE}$ = weight percent of propylene in PE component or block

To estimate the amount of the block in the Crystalline Block Composite, apply Equations 3 through 5, and the amount of the isolated PP that is measured by HTLC analysis is used to determine the amount of polypropylene present in the diblock copolymer. The amount isolated or separated first in the HTLC analysis represents the 'unbound PP' and its composition is representative of the PP hard block present in the diblock copolymer. By substituting the overall weight percent C3 of the whole polymer in the left hand side of Equation 3, and the weight fraction of PP (isolated from HTLC) and the weight fraction of PE (separated by HTLC) into the right hand side of equation 3, the weight percent of C3 in the PE fraction can be calculated using Equations 4 and 5. The PE fraction is described as the fraction separated from the unbound PP and contains the diblock and unbound PE. The composition of the isolated PP is assumed to be the same as the weight percent propylene in the iPP block as described previously.

$$wt\%\,C3_{Overall} = w_{PP\,isolated}\left(wt\%C3_{PP}\right) + w_{PE\text{-}fraction}\left(wt\%C3_{PE-fraction}\right) \qquad Eq.\ 3$$

$$wt\%C3_{PE-fraction} = \frac{wt\%C3_{Overall} - w_{PPisolated}\left(wt\%C3_{PP}\right)}{w_{PE-fraction}} \qquad Eq.\ 4$$

$$w_{PE-fraction} = 1 - w_{PPisolated} \qquad Eq.\ 5$$

where

$w_{PPisolated}$ = weight fraction of isolated PP from HTLC
$w_{PE\text{-}fraction}$ = weight fraction of PE separated from HTLC, containing the diblock and unbound PE
$wt\%C3_{pp}$ = weight percent of propylene in the PP; which is also the same amount of propylene present in the PP block and in the unbound PP
$wt\%C3_{PE\text{-}fraction}$ = weight percent of propylene in the PE-fraction that was separated by HTLC
$wt\%C3_{Overall}$ = overall weight percent propylene in the whole polymer

The amount of wt% C3 in the polyethylene fraction from HTLC represents the amount of propylene present in the block copolymer fraction that is above the amount present in the 'unbound polyethylene'. To account for the 'additional' propylene present in the polyethylene fraction, the only way to have PP present in this fraction is for the PP polymer chain to be connected to a PE polymer chain (or else it would have been isolated with the PP fraction separated by HTLC). Thus, the PP block remains adsorbed with the PE block until the PE fraction is separated.
The amount of PP present in the diblock is calculated using Equation 6.

$$w_{PP-diblock} = \frac{wt\%C3_{PE-fraction} - wt\%C3_{PE}}{wt\%\,C3_{PP} - wt\%C3_{PE}} \qquad Eq.\ 6$$

Where

$wt\%C3_{PE\text{-}fraction}$ = weight percent of propylene in the PE-fraction that was separated by HTLC (Equation 4)
$wt\%C3_{PP}$ = weight percent of propylene in the PP component or block (defined previously)
$wt\%C3_{PE}$ = weight percent of propylene in the PE component or block (defined previously)
$w_{PP\text{-}diblock}$ = weight fraction of PP in the diblock separated with PE-fraction by HTLC

The amount of the diblock present in this PE fraction can be estimated by assuming that the ratio of the PP block to PE block is the same as the overall ratio of PP to PE present in the whole polymer. For example, if the overall ratio of PP to PE is 1:1 in the whole polymer, then it assumed that the ratio of PP to PE in the diblock is also 1:1. Thus the weight fraction of diblock present in the PE fraction would be weight fraction of PP in the diblock ($w_{PP\text{-}diblock}$) multiplied by two. Another way to calculate this is by dividing the weight fraction of PP in the diblock ($w_{PP\text{-}diblock}$) by the weight fraction of PP in the whole polymer (Equation 2).
To further estimate the amount of diblock present in the whole polymer, the estimated amount of diblock in the PE fraction is multiplied by the weight fraction of the PE fraction measured from HTLC. To estimate the crystalline block composite index, the amount of diblock copolymer is determined by Equation 7. To estimate the CBCI, the weight fraction of diblock in the PE fraction calculated using Equation 6 is divided by the overall weight fraction of PP (as calculated in equation 2) and then multiplied by the weight fraction of the PE fraction. The value of the CBCI can range from 0 to 1, wherein 1 would be equal to 100% diblock and zero would be for a material such as a traditional blend or random copolymer.

$$CBCI = \frac{w_{PP-diblock}}{w_{PP}} \cdot w_{PE-fraction} \qquad Eq.\ 7$$

where

$w_{PP-diblock}$ = weight fraction of PP in the diblock separated with the PE-fraction by HTLC (Equation 6)
$w_{PP}$ = weight fraction of PP in the polymer
$w_{PE-fraction}$ = weight fraction of PE separated from HTLC, containing the diblock and unbound PE (Equation 5)

For example, if an iPP-PE (i.e., isotactic polypropylene block and propyleneethylene block) polymer contains a total of 53.3 wt% C3 and is made under the conditions to produce an PE polymer with 10 wt% C3 and an iPP polymer containing 99 wt% C3, the weight fractions of PP and PE are 0.487 to 0.514, respectively (as calculated using Equation 2).

Bicomponent Filaments & Nonwovens

The remainder of the example is directed to the materials and methods used in the manufacturing of the bicomponent filaments. The materials used in the bicomponent filaments are shown in the Table 4 below.

Table 4

| Resin | Type | MFI/MFR | density | Comment |
|---|---|---|---|---|
| Lumicene MR 2001 | Metallocene PP | 25 | 0.905 | Available from Total Research |
| ASPUN 6000 | PE | 19 | 0.935 | Available from the Dow Chemical Company |
| ASPUN 6834 | PE | 17 | 0.950 | Available from the Dow Chemical Company |
| ASPUN 6850 | PE | 30 | 0.955 | Available from the Dow Chemical Company |

Table 5 shows the various fibers that were manufactured into a nonwoven for testing. Sample #s 1 and 2 are comparative samples while Sample #s 3 - 10 are inventive samples. In Sample #s 3 - 9, the compatibilizer is present in the sheath while for Sample #10 it is present in the core.

Table 5

| Sample | Type of Fiber | GSM | Core | Sheath |
|---|---|---|---|---|
| Sample #1* | Mono | 20 | MR 2001 | MR 2001 |
| Sample #2* | BICO 70/30 | 20 | MR 2001 | ASPUN 6000 |
| Sample #3 | BICO 70/30 | 20 | MR 2001 | 95 % ASPUN 6000 +5% CBC1 |
| Sample #4 | BICO 70/30 | 20 | MR 2001 | 90 % ASPUN 6000 +10% CBC1 |
| Sample #5 | BICO 70/30 | 20 | MR 2001 | 85 % ASPUN 6000 +15% CBC1 |
| Sample #6 | BICO 50/50 | 20 | MR 2001 | 90 % ASPUN 6000 +10% CBC1 |
| Sample #7 | BICO 70/30 | 20 | MR 2001 | 90% ASPUN 6000 +10% CBC2 |
| Sample #8 | BICO 70/30 | 20 | MR 2001 | 90% ASPUN 6850 +10% CBC1 |
| Sample #9 | BICO 70/30 | 20 | MR 2001 | 90% ASPUN 6834 +10% CBC1 |
| Sample #10 | BICO 70/30 | 20 | 95% MR 2001 + 5% CBC1 | ASPUN 6000 |
| *comparative samples | | | | |

Table 6 shows the processing conditions used to produce a nonwoven from the bicomponent filament samples shown in the Table 5. The samples were manufactured on Reicofil 4 spunbond system having 6827 holes/meter with a hole diameter of 0.6 millimeters. The core component and the sheath component were melted and extruded separately, and then combined together through a stack of distribution plates to create core/sheath filament structures. The filaments were randomly deposited on a moving belt and subsequently thermally bonded via a calendar (a roll mill) having two rolls, one of which was an engraved roll and the other a smooth roll.

Table 6

| Sample | Technology | Total throughput [kg/h] | Line Speed [m/min] | Nip Pressure [N/mm] | Bonding temperature E/S [°C/°C] |
|---|---|---|---|---|---|
| Sample #1* | RF 4 | 227 | 174 | 70 | 155/153 |
| Sample #2* | RF 4 | 227 | 174 | 70 | 150/148 |
| Sample #3 | RF 4 | 227 | 174 | 70 | 150/148 |
| Sample #4 | RF 4 | 227 | 174 | 70 | 150/148 |
| Sample #5 | RF 4 | 227 | 174 | 70 | 150/148 |
| Sample #6 | RF 4 | 227 | 174 | 70 | 150/148 |
| Sample #7 | RF 4 | 227 | 174 | 70 | 150/148 |
| Sample #8 | RF 4 | 227 | 174 | 70 | 150/148 |
| Sample #9 | RF 4 | 227 | 174 | 70 | 150/148 |
| Sample #10 | RF 4 | 227 | 174 | 70 | 150/148 |
| *comparative samples | | | | | |

Table 7 shows the mechanical properties of the nonwoven samples of Table 5, 4 weeks and 8 weeks after production.

Table 7

| Sample | # of weeks | CD Max tensile Strength [N/50 mm] | CD Elongation at break [%] | MD Max tensile Strength [N/50 mm] | MD Elongation at break [%] |
|---|---|---|---|---|---|
| Sample #1* | 4 | 23.6 | 52 | 33.7 | 45 |
| | 8 | 21.6 | 46 | 31.7 | 40 |
| Sample #2* | 4 | 15.6 | 105 | 25.9 | 99 |
| | 8 | 16 | 111 | 25.6 | 94 |
| Sample #3 | 4 | 15.9 | 107 | 25.8 | 98 |
| | 8 | 16.4 | 118 | 25.5 | 98 |
| Sample #4 | 4 | 16.7 | 106 | 23.9 | 83 |
| | 8 | 16 | 104 | 24.9 | 91 |
| Sample #5 | 4 | 16.8 | 100 | 21.1 | 82 |
| | 8 | 15.5 | 91 | 22.9 | 72 |
| Sample #6 | 4 | 13 | 99 | 20.2 | 84 |
| | 8 | 12.6 | 88 | 19 | 80 |
| Sample #7 | 4 | 14.5 | 84 | 21.4 | 58 |
| | 8 | 16 | 89 | 21.8 | 62 |
| Sample #8 | 4 | 12.8 | 141 | 24.1 | 129 |
| | 8 | 13.3 | 146 | 23.8 | 118 |

(continued)

| Sample | # of weeks | CD Max tensile Strength [N/50 mm] | CD Elongation at break [%] | MD Max tensile Strength [N/50 mm] | MD Elongation at break [%] |
|--------|-----------|-----------------------------------|---------------------------|-----------------------------------|---------------------------|
| Sample #9 | 4 | 13.3 | 131 | 23.1 | 110 |
|  | 8 | 13.2 | 126 | 22.9 | 107 |
| *comparative samples | | | | | |

From the Table 7, it may be seen that the nonwoven fabrics having the 5 bicomponent filaments disclosed herein display no significant adverse effect on the tensile properties. Also, from Tables 7 & 8, a significant difference in tensile properties and abrasion resistance is not observed after 4 and 8 weeks of aging.

Table 8 shows the fuzz level as a measure of abrasion resistance of nonwoven fabric. Lower fuzz level indicates better abrasion resistance

Table 8

| Sample | 1 week after production (g/cm$^2$) | 4 weeks after production (g/cm$^2$) | 8 weeks after production (g/cm$^2$) |
|--------|-----------------------------------|-------------------------------------|-------------------------------------|
| Sample #1* | 0.31 | 0.23 | 0.26 |
| Sample #2* | 0.35 | 0.33 | 0.35 |
| Sample #3 | 0.33 | 0.33 | 0.33 |
| Sample #4 | 0.29 | 0.24 | 0.29 |
| Sample #5 | 0.25 | 0.28 | 0.25 |
| Sample #6 | 0.24 | 0.26 | 0.22 |
| Sample #7 | 0.24 | 0.26 | 0.29 |
| Sample #8 | 0.27 | 0.25 | 0.24 |
| Sample #9 | 0.25 | 0.22 | 0.21 |
| *comparative samples | | | |

From the data in the Table 8 it may be seen that the inventive samples (Sample #3 - 9) show an improvement in abrasion resistance over time.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a cited document the meaning or definition assigned to that term in this document shall govern.

**Claims**

1.  A bicomponent filament comprising:

    a first region comprising an ethylene-based polymer;
    a second region comprising a propylene-based polymer; and
    a compatibilizer comprising a crystalline block composite having (1) a crystalline ethylene-based polymer (2) a crystalline alpha-olefin-based polymer, and (3) a block copolymer having a crystalline ethylene block and a crystalline alpha-olefin block, wherein the crystalline ethylene block is essentially the same composition as the crystalline ethylene-based polymer and the crystalline alpha-olefin block is essentially the same composition as the crystalline alpha-olefin-based polymer;

wherein the compatibilizer is present in at least one of the first region or the second region.

2. The bicomponent filament of Claim 1, wherein the crystalline ethylene-based polymer has an ethylene content of greater than 90 mol.%.

3. The bicomponent filament of Claim 1, wherein the crystalline alpha-olefin-based polymer has greater than 90 mol.% units derived from propylene and a comonomer selected from the group consisting of $C_4$-$C_{10}$ alpha-olefins.

4. The bicomponent filament of Claim 1, wherein the ethylene-based polymer has a density of 0.920 to 0.965 g/cc and a melt index, $I_2$, of 0.5 to 150 g/10 minutes determined according to ASTM D1238 at 190°C and 2.16 kg.

5. The bicomponent filament of Claim 1, wherein the compatibilizer is present only in the first region in an amount of from 1 wt.% to less than 50 wt.%, based on the total weight of polymers present in the first region.

6. The bicomponent filament of Claim 1, wherein the compatibilizer is present only in the second region in an amount of from 1 wt.% to less than 50 wt.%, based on the total weight of polymers present in the second region.

7. The bicomponent filament of Claim 1, wherein the compatibilizer is present in the first region and in the second region in an amount of from 1 wt.% to less than 50 wt.%, based on the total weight of polymers present in the first region and the second region.

8. The bicomponent filament of Claim 1, wherein the first region and the second region are arranged in the form of a sheath/core, tipped tri-lobal fibers, segmented cross, side-by-side, conjugate, islands in the sea or a segmented pie.

9. The bicomponent filament of Claim 1, wherein the first region is a sheath of the bicomponent filament and the second region is a core of the bicomponent filament.

10. The bicomponent filament of Claim 9, wherein the core to sheath weight ratio is 50:50 to 90:10.

11. A method of manufacturing a bicomponent filament, the method comprising:

blending a composition comprising an ethylene-based polymer, a propylene-based polymer, and a compatibilizer, wherein the compatibilizer comprises a crystalline block composite having (1) a crystalline ethylene-based polymer (2) a crystalline alpha-olefin based polymer, and (3) a block copolymer having a crystalline ethylene block and a crystalline alpha-olefin block, wherein the crystalline ethylene block is essentially the same composition as the crystalline ethylene-based polymer and the crystalline alpha-olefin block is essentially the same composition as the crystalline alpha-olefin based polymer; and
extruding the composition to form a bicomponent filament;
wherein the bicomponent filament comprises

a first region comprising the ethylene-based polymer;
a second region comprising the propylene-based polymer; and
the compatibilizer is present in at least one of the first region or the second region.

12. A nonwoven fabric formed from the bicomponent filament of any one of claims 1 to 10.

13. A method of manufacturing a nonwoven fabric, the method comprising:

providing two or more bicomponent filaments, each bicomponent filament comprising
a first region comprising an ethylene-based polymer;
a second region comprising a propylene-based polymer; and
a compatibilizer comprising a crystalline block composite having (1) a crystalline ethylene-based polymer (2) a crystalline alpha-olefin-based polymer, and (3) a block copolymer having a crystalline ethylene block and a crystalline alpha-olefin block, wherein the crystalline ethylene block is essentially the same composition as the crystalline ethylene-based polymer and the crystalline alpha-olefin block is essentially the same composition as the crystalline alpha-olefin-based polymer;
wherein the compatibilizer is present in at least one of the first region or the second region; and
bonding the two or more bicomponent filaments to each other to form a nonwoven fabric.

**Patentansprüche**

1. Ein Bikomponentenfaden, beinhaltend:

   einen ersten Bereich, beinhaltend ein Polymer auf Ethylenbasis;
   einen zweiten Bereich, beinhaltend ein Polymer auf Propylenbasis; und
   einen Phasenvermittler, beinhaltend einen kristallinen Blockverbundstoff mit (1) einem kristallinen Polymer auf Ethylenbasis, (2) einem kristallinen Polymer auf alpha-Olefin-Basis und (3) einem Blockcopolymer mit einem kristallinen Ethylenblock und einem kristallinen alpha-Olefin-Block, wobei der kristalline Ethylenblock im Wesentlichen die gleiche Zusammensetzung wie das kristalline Polymer auf Ethylenbasis ist und der kristalline alpha-Olefin-Block im Wesentlichen die gleiche Zusammensetzung wie das kristalline Polymer auf alpha-Olefin-Basis ist;
   wobei der Phasenvermittler in mindestens einem von dem ersten Bereich oder dem zweiten Bereich vorhanden ist.

2. Bikomponentenfaden gemäß Anspruch 1, wobei das kristalline Polymer auf Ethylenbasis einen Ethylengehalt von mehr als 90 Mol-% aufweist.

3. Bikomponentenfaden gemäß Anspruch 1, wobei das kristalline Polymer auf alpha-Olefin-Basis mehr als 90 Mol-% Einheiten aufweist, die von Propylen abgeleitet sind, und ein Comonomer, das ausgewählt ist aus der Gruppe, bestehend aus $C_4$-$C_{10}$-alpha-Olefinen.

4. Bikomponentenfaden gemäß Anspruch 1, wobei das Polymer auf Ethylenbasis eine Dichte von 0,920 bis 0,965 g/cm$^3$ und einen Schmelzindex, $I_2$, von 0,5 bis 150 g/10 Minuten aufweist, bestimmt gemäß ASTM D1238 bei 190 °C und 2,16 kg.

5. Bikomponentenfaden gemäß Anspruch 1, wobei der Phasenvermittler ausschließlich in dem ersten Bereich in einer Menge von 1 Gew.-% bis weniger als 50 Gew.-%, bezogen auf das Gesamtgewicht der in dem ersten Bereich vorhandenen Polymere, vorhanden ist.

6. Bikomponentenfaden gemäß Anspruch 1, wobei der Phasenvermittler ausschließlich in dem zweiten Bereich in einer Menge von 1 Gew.-% bis weniger als 50 Gew.-%, bezogen auf das Gesamtgewicht der in dem zweiten Bereich vorhandenen Polymere, vorhanden ist.

7. Bikomponentenfaden gemäß Anspruch 1, wobei der Phasenvermittler in dem ersten Bereich und in dem zweiten Bereich in einer Menge von 1 Gew.-% bis weniger als 50 Gew.-%, bezogen auf das Gesamtgewicht der in dem ersten Bereich und dem zweiten Bereich vorhandenen Polymere, vorhanden ist.

8. Bikomponentenfaden gemäß Anspruch 1, wobei der erste Bereich und der zweite Bereich in Form einer Hülle/eines Kerns, von mit Spitzen versehenen trilobalen Fasern, eines segmentierten Kreuzes, Seite an Seite, konjugiert, von Inseln im Meer oder einer segmentierten Torte angeordnet sind.

9. Bikomponentenfaden gemäß Anspruch 1, wobei der erste Bereich eine Hülle des Bikomponentenfadens ist und der zweite Bereich ein Kern des Bikomponentenfadens ist.

10. Bikomponentenfaden gemäß Anspruch 9, wobei das Gewichtsverhältnis von Hülle zu Kern 50 : 50 bis 90 : 10 beträgt.

11. Ein Verfahren zum Herstellen eines Bikomponentenfadens, wobei das Verfahren Folgendes beinhaltet:

    Mischen einer Zusammensetzung, die ein Polymer auf Ethylenbasis, ein Polymer auf Propylenbasis und einen Phasenvermittler beinhaltet, wobei der Phasenvermittler einen kristallinen Blockverbundstoff mit (1) einem kristallinen Polymer auf Ethylenbasis, (2) einem kristallinen Polymer auf alpha-Olefin-Basis und (3) einem Blockcopolymer mit einem kristallinen Ethylenblock und einem kristallinen alpha-Olefin-Block beinhaltet, wobei der kristalline Ethylenblock im Wesentlichen die gleiche Zusammensetzung wie das kristalline Polymer auf Ethylenbasis ist und der kristalline alpha-Olefin-Block im Wesentlichen die gleiche Zusammensetzung wie das kristalline Polymer auf alpha-Olefin-Basis ist; und
    Extrudieren der Zusammensetzung, um einen Bikomponentenfaden zu bilden;
    wobei der Bikomponentenfaden Folgendes beinhaltet:

einen ersten Bereich, beinhaltend das Polymer auf Ethylenbasis;
einen zweiten Bereich, beinhaltend das Polymer auf Propylenbasis; und
wobei der Phasenvermittler in mindestens einem von dem ersten Bereich oder
dem zweiten Bereich vorhanden ist.

12. Ein Vliesstoff, der aus dem Bikomponentenfaden gemäß einem der Ansprüche 1 bis 10 gebildet ist.

13. Ein Verfahren zum Herstellen eines Vliesstoffs, wobei das Verfahren Folgendes beinhaltet:

Bereitstellen von zwei oder mehr Bikomponentenfäden, wobei jeder Bikomponentenfaden einen ersten Bereich beinhaltet, der ein Polymer auf Ethylenbasis beinhaltet;
einen zweiten Bereich, beinhaltend ein Polymer auf Propylenbasis; und
einen Phasenvermittler, beinhaltend einen kristallinen Blockverbundstoff mit (1) einem kristallinen Polymer auf Ethylenbasis, (2) einem kristallinen Polymer auf alpha-Olefin-Basis und (3) einem Blockcopolymer mit einem kristallinen Ethylenblock und einem kristallinen alpha-Olefin-Block, wobei der kristalline Ethylenblock im Wesentlichen die gleiche Zusammensetzung wie das kristalline Polymer auf Ethylenbasis ist und der kristalline alpha-Olefin-Block im Wesentlichen die gleiche Zusammensetzung wie das kristalline Polymer auf alpha-Olefin-Basis ist;
wobei der Phasenvermittler in mindestens einem von dem ersten Bereich oder dem zweiten Bereich vorhanden ist; und
Verbinden der zwei oder mehr Bikomponentenfäden miteinander, um einen Vliesstoff zu bilden.

## Revendications

1. Un filament bicomposant comprenant :

une première région comprenant un polymère à base d'éthylène ;
une deuxième région comprenant un polymère à base de propylène ; et
un agent de compatibilisation comprenant un composite à blocs cristallins ayant (1) un polymère à base d'éthylène cristallin (2) un polymère à base d'alpha-oléfine cristallin, et (3) un copolymère à blocs ayant un bloc d'éthylène cristallin et un bloc d'alpha-oléfine cristallin, où le bloc d'éthylène cristallin est essentiellement de la même composition que le polymère à base d'éthylène cristallin et le bloc d'alpha-oléfine cristallin est essentiellement de la même composition que le polymère à base d'alpha-oléfine cristallin ;
où l'agent de compatibilisation est présent dans au moins soit la première région soit la deuxième région.

2. Le filament bicomposant de la revendication 1, où le polymère à base d'éthylène cristallin a une teneur en éthylène de plus de 90 % en moles.

3. Le filament bicomposant de la revendication 1, où le polymère à base d'alpha-oléfine cristallin a plus de 90 % en moles d'unités dérivées de propylène et un comonomère sélectionné dans le groupe constitué d'alpha-oléfines en $C_4$ à $C_{10}$.

4. Le filament bicomposant de la revendication 1, où le polymère à base d'éthylène a une masse volumique de 0,920 à 0,965 g/cm$^3$ et un indice de fluidité à l'état fondu, $I_2$, de 0,5 à 150 g/10 minutes déterminé selon l'ASTM D1238 à 190 °C et 2,16 kg.

5. Le filament bicomposant de la revendication 1, où l'agent de compatibilisation est présent uniquement dans la première région en une quantité allant de 1 % en poids à moins de 50 % en poids, rapporté au poids total de polymères présents dans la première région.

6. Le filament bicomposant de la revendication 1, où l'agent de compatibilisation est présent seulement dans la deuxième région en une quantité allant de 1 % en poids à moins de 50 % en poids, rapporté au poids total de polymères présents dans la deuxième région.

7. Le filament bicomposant de la revendication 1, où l'agent de compatibilisation est présent dans la première région et dans la deuxième région en une quantité allant de 1 % en poids à moins de 50 % en poids, rapporté au poids total de polymères présents dans la première région et la deuxième région.

8. Le filament bicomposant de la revendication 1, où la première région et la deuxième région sont agencées en forme de gaine/cœur, de fibres trilobées à pointes, de croix segmentée, côte à côte, conjuguées, en îlots ou en camembert segmenté.

9. Le filament bicomposant de la revendication 1, où la première région est une gaine du filament bicomposant et la deuxième région est un cœur du filament bicomposant.

10. Le filament bicomposant de la revendication 9, où le rapport en poids cœur à gaine est de 50/50 à 90/10.

11. Un procédé de fabrication d'un filament bicomposant, le procédé comprenant :

le mélange homogène d'une composition comprenant un polymère à base d'éthylène, un polymère à base de propylène, et un agent de compatibilisation, où l'agent de compatibilisation comprend un composite à blocs cristallins ayant (1) un polymère à base d'éthylène cristallin (2) un polymère à base d'alpha-oléfine cristallin, et (3) un copolymère à blocs ayant un bloc d'éthylène cristallin et un bloc d'alpha-oléfine cristallin, où le bloc d'éthylène cristallin est essentiellement de la même composition que le polymère à base d'éthylène cristallin et le bloc d'alpha-oléfine cristallin est essentiellement de la même composition que le polymère à base d'alpha-oléfine cristallin ; et
l'extrusion de la composition afin de former un filament bicomposant ;
où le filament bicomposant comprend

une première région comprenant le polymère à base d'éthylène ;
une deuxième région comprenant le polymère à base de propylène ; et
l'agent de compatibilisation est présent dans au moins soit la première région soit la deuxième région.

12. Un tissu non tissé formé à partir du filament bicomposant de l'une quelconque des revendications 1 à 10.

13. Un procédé de fabrication d'un tissu non tissé, le procédé comprenant :

la fourniture de deux filaments bicomposants ou plus, chaque filament bicomposant comprenant
une première région comprenant un polymère à base d'éthylène ;
une deuxième région comprenant un polymère à base de propylène ; et
un agent de compatibilisation comprenant un composite à blocs cristallins ayant (1) un polymère à base d'éthylène cristallin (2) un polymère à base d'alpha-oléfine cristallin, et (3) un copolymère à blocs ayant un bloc d'éthylène cristallin et un bloc d'alpha-oléfine cristallin, où le bloc d'éthylène cristallin est essentiellement de la même composition que le polymère à base d'éthylène cristallin et le bloc d'alpha-oléfine cristallin est essentiellement de la même composition que le polymère à base d'alpha-oléfine cristallin ;
où l'agent de compatibilisation est présent dans au moins soit la première région soit la deuxième région ; et
la liaison des deux filaments bicomposants ou plus l'un à l'autre afin de former un tissu non tissé.

# EP 3 380 656 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1944395 A
- WO 2015123829 A
- US 5266392 A
- WO 2005111291 A1
- US 20140248811 A
- US 2014024881 A
- US 8785554 B
- US 8822598 B
- US 8822599 B
- US 20110313106
- US 20110313107 A
- US 20110313108 A
- US 20080269412
- WO 2005090426 A
- US 4041203 A, Brock
- US 5169706 A, Collier
- US 5145727 A, Potts
- US 5178931 A, Perkins
- US 5188885 A, Timmons
- US 4720415 A
- US 5167897 A
- US 4107364 A
- US 4209463 A
- US 4525407 A
- US 20100093964
- US 64311109
- US 5919983 A

### Non-patent literature cited in the description

- **BATRA, SUBHASH ; POURDEYHIMI, BAHNAM.** *Introduction to Nonwoven Technologies,* 2012
- **S. C. O. UGBOLUE.** *Polyolefin Fibres: Industrial and Medical Applications,* 2009
- **WILLIAMS ; WARD.** *J. Polym. Sci., Polym. Let.,* 1968, vol. 6, 621